# EUROPEAN PATENT APPLICATION

(11) **EP 3 812 792 A1**
(43) Date of publication of application: **28.04.2021**
(21) Application number: 19822472.7
(22) Date of filing: 24.04.2019
(51) Int. Cl.: G01S 7/497, B60R 16/02

(54) **DISTANCE MEASURING DEVICE AND DETECTION DEVICE**

(30) Priority: 20.06.2018 JP 2018116672
(71) Applicant: Pioneer Corporation, Tokyo 113-0021 (JP)
(72) Inventor: NONAKA, Yoshiya, Kawagoe-shi, Saitama 350-8555 (JP)
(74) Representative: Viering, Jentschura & Partner mbB Patent- und Rechtsanwälte
(86) International application number: PCT/JP2019/017349
(87) International publication number: WO 2019/244473

(57) **Abstract**

Scanner box Bx is a housing of the scanner L which functions as a ranging device or a detection device. The housing has a description of range-finding information associated with range-finding range (detection range) where the scanner L performs ranging (detection).

## Description

### TECHNICAL FIELD

The present invention relates to a technique for adjusting the detection range of a plurality of detection devices.

### BACKGROUND TECHNIQUE

Conventionally, a system for arranging a plurality of scanning units which performs scanning by a laser beam or the like is disclosed. For example, Patent Reference 1 discloses such a technique that, when the detection areas of distance measuring units are arranged so as to partially overlap, the distance measurement of each distance measuring unit is executed at a different timing from the distance measurement of the other distance measuring unit (s) whose detection area(s) overlap with the said each distance measuring unit.

### PRIOR ART REFERENCES

### PATENT REFERENCES

Patent Reference 1: Japanese Patent Laid-Open No. 2016-8875

### SUMMARY OF THE INVENTION

### PROBLEM TO BE SOLVED BY THE INVENTION

When performing automated driving and other ADAS (Advanced Driver Assistance System) using the detected results of sensors attached to vehicles, high-precision detection accuracy is required for each sensor, and the attachment of these sensors must be performed accurately. On the other hand, conventionally, it is often the case that the sensor (s) are arranged roughly with reference to the front and side surfaces of the housing, and it is difficult to accurately place the sensor(s).

The present invention has been made to solve the issues as described above, and a main object thereof is to provide a housing of a ranging device for suitable installation of the ranging device and a housing of a detection device for suitable installation of the detection device.

### MEANS FOR SOLVING THE PROBLEM

One invention is a housing of a ranging device, the housing having a description of information associated with a range-finding range where the ranging device performs ranging.

Another invention is a housing of a detection device, the housing having a description of information associated with a detection range by the detection device.

### BRIEF DESCRIPTION OF THE DRAWINGS

FIG. 1 is a schematic configuration of a lidar unit.
FIG. 2 is an example of the arrangement of scanner boxes with respect to a vehicle.
FIG. 3 is a perspective view of a scanner box.
FIG. 4 is a plane view of each surface of the scanner box.
FIG. 5 is an enlarged view of the ranging information provided at the scanner box.
FIG. 6 is a diagram showing an upper surface and a side surface of the scanner box for accommodating one scanner.
FIGS. 7A to 7C each is a top view of the upper surface and the side surface where ranging information according to the second to fourth display embodiments is noted.
FIGS. 8A to 8C is a scanner box holed by a supporter.
FIG. 9 illustrates a plane view of the front, rear, top, and side surfaces of the scanner box according to a modification.
FIG. 10 is a diagram explicitly showing auxiliary lines drawn on the side surface based on marks at the time of mounting the scanner box to the vehicle.

### DETAILED DESCRIPTION OF THE PREFERRED EMBODIMENTS

According to a preferred embodiment of the present invention, there is provided a housing of a ranging device, the housing having a description of information associated with a range-finding range where the ranging device performs ranging. In this case, "information associated with a range-finding range" may be described as a mark or a figure or the like, may be described as character (s) . Since the information associated with the range-finding range is described in the housing, a user can suitably install the housing of the ranging device on an object such as a vehicle while referring to the information described in the housing. Further, information associated with the range-finding range is also suitably referred to in the calibration of the ranging device after the installation of the housing.

In one mode of the housing of the ranging device, the information associated with the range-finding range includes information including a reference point of the ranging. This reference point refers, for example, to a point that is regarded as distance 0 in ranging. According to this mode, the user accurately recognizes the reference point of the ranging thereby to suitably perform installation of the housing of the ranging device and calibration of the ranging device after installation. In a preferred example, a mark indicative of a position of the reference point is described on the housing as the information including the reference point of the ranging.

In another mode of the housing of the ranging device, at least one of a center line of the range-finding range and angular information on the range-finding range is described as the information associated with the range-finding range. According to this mode, the user accurately recognizes the range-finding range of the ranging device thereby to suitably perform installation of the housing of the ranging device and calibration of the ranging device after the installation. In a preferred example, a sector having a center angle equal to an angle of the range-finding range is described on the housing as the angular information.

In still another mode of the housing of the ranging device, a center line of the range-finding range and a reference point of the ranging are described as the information associated with the range-finding range, the reference point being indicated as an intersection of the center line and the perpendicular line to the center line. According to this mode, it is possible to clearly display the center line of the range-finding range and the reference point of the ranging in a state where the user can easily recognize them.

In still another mode of the housing of the ranging device, information associated with the range-finding range with respect to horizontal direction and vertical direction is described as the information associated with the range-finding range. According to this mode, it is possible to clearly display the range-finding range of the housing of such a ranging device that has a three-dimensional rang-finding range. In a preferred example, the information associated with the range-finding range with respect to the vertical direction is described on a side surface of the housing and the information associated with the range-finding range with respect to the horizontal direction is described on an upper surface or a bottom surface of the housing.

In still another mode of the housing of the ranging device, there are multiple ranging devices including the ranging device in the housing, and information associated with range-finding ranges with reference to the multiple ranging devices is provided on the housing. According to this mode, even when installing the housing in which a plurality of ranging device is accommodated, the user can suitably place the housing of the ranging device with reference to the information described in the housing.

In still another mode of the housing of the ranging device, the housing has the description indicative of multiple range-finding range reference points as the information associated with the range-finding range, and a line, which connects at least two points selected from the multiple range-finding range reference points, indicates information on a center line of the range-finding range or angular information on the range-finding range. According to this mode, in consideration of the appearance design, it is possible to make the description about the range-finding range written on the housing less conspicuous.

According to another preferable embodiment of the present invention, there is provided a housing of a detection device, the housing having a description of information associated with a detection range by the detection device. In this case, "information associated with a detection range" may be described as a mark or a figure or the like, may be described as character(s). Since the information associated with the detection range is described in the housing, a user can suitably install the housing of the detection device on an object such as a vehicle while referring to the information described in the housing. Further, information associated with the detection range is also suitably referred to in the calibration of the detection device after the installation of the housing.

In one mode of the housing of the detection device, at least one of a center line of the detection range and angular information on the detection range is described as the information associated with the detection range. According to this mode, the user accurately recognizes the detection range of the detection device thereby to suitably perform installation of the housing of the detection device and calibration of the detection device after the installation. In a preferred example, a sector having a center angle equal to an angle of the detection range is described on the housing as the angular information.

In another mode of the housing of the detection device, the detection device is a ranging device which measures a distance to an object, and a center line of the detection range and a reference point of ranging are described as the information associated with the detection range, the reference point being indicated as an intersection of the center line and the perpendicular line to the center line. According to this mode, it is possible to clearly display the center line of the range-finding range and the reference point of the ranging in a state where the user can easily recognize them.

In still another mode of the housing of the detection device, information associated with the detection range with respect to horizontal direction and vertical direction is described as the information associated with the detection range. According to this mode, it is possible to clearly display the detection range of the housing of such a detection device that has a three-dimensional detection range. In a preferred example, the information associated with the detection range with respect to the vertical direction is described on a side surface of the housing and the information associated with the detection range with respect to the horizontal direction is described on an upper surface or a bottom surface of the housing.

In still another mode of the housing of the detection device, there are multiple detection devices including the detection device in the housing, and information associated with detection ranges with reference to the detection devices is provided on the housing. According to this mode, even when installing the housing in which a plurality of detection device is accommodated, the user can suitably place the housing of the detection device with reference to the information described in the housing.

In still another mode of the housing of the detection device, the housing has the description indicative of multiple detection range reference points as the information associated with the detection range, and a line, which connects at least two points selected from the multiple detection range reference points, indicates information on a center line of the detection range or angular information on the detection range. According to this mode, in consideration of the appearance design, it is possible to make the description about the detection range written on the housing less conspicuous.

### EMBODIMENTS

A preferred embodiment of the present invention is described be low with reference to drawings .

### [Overall Configuration]

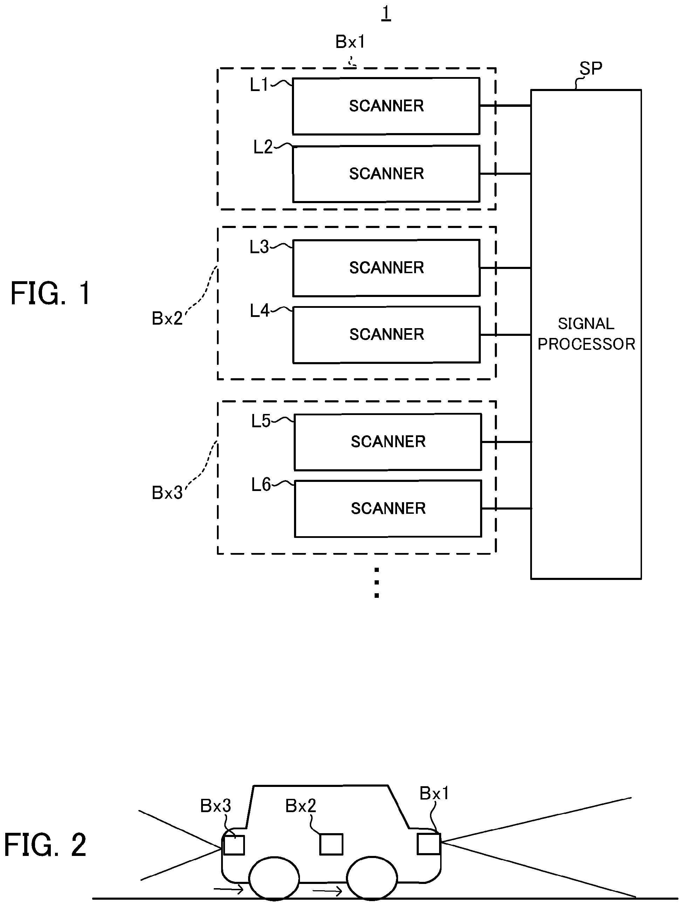

FIG. 1 is a schematic configuration of a lidar unit 1 according to the present embodiment. The lidar unit 1 is mounted on the vehicle . The lidar unit 1 emits a pulsed laser that is an electromagnetic wave within a predetermined angular range in the horizontal and the vertical directions to discretely measure the distance to an object present in the external field. Thereby, the lidar unit 1 generates a three-dimensional point cloud information indicative of the position of the object. The lidar unit 1 includes a plurality of scanners (L1 to L4, ...), a plurality of scanner boxes (Bxlto Bx3, ...) for accommodating the scanners, and a signal processor SP for transmitting and receiving signals to and from the scanner boxes . In the following description, when each of the scanners (L1 to L4, ...) is not distinguished, it is simply referred to as "scanner L", and when each of the scanner boxes (Bx1 to Bx3, ...) is not distinguished, it is simply referred to as "scanner box Bx". The lidar unit 1, for example, as part of the advanced driving support system, is used for the purpose of the peripheral environment recognition aid of the vehicle.

The scanner L emits laser pulses (hereinafter, also referred to as "transmission light pulses") within a predetermined horizontal angle range and a predetermined vertical angle range. The scanner L emits a transmission light pulse with respect to each segment into which the above-mentioned horizontal angle range is divided by an equal angle. Then, the scanner L generates a signal relating to the received light intensity with respect to each segment by receiving the reflected light (hereinafter, referred to as "receiving light pulse") of the transmission light pulse within a predetermined period after the emission of the transmission light pulse, and outputs the signal to the signal processor SP. On a basis of the signal received from the scanner L, the signal processor SP outputs a point cloud information indicating each set of the distance and the angle with respect to each point of an object subjected to irradiation by the transmission light pulse. The signal processor SP may be provided for each scanner L.

The scanner L is also housed in a scanner box Bx for accommodating one or more scanners L. In FIG. 1, the scanner box Bx1 houses the scanner L1 and the scanner L2, the scanner box Bx2 houses the scanner L3 and the scanner L4, and the scanner box Bx3 houses the scanner L5 and the scanner L6.

FIG. 2 illustrates an example of the arrangement of the scanner boxes Bx1 to Bx3 with respect to the vehicle. In the example of FIG. 2, the scanner box Bx1 is disposed in front of the vehicle (e.g., near the headlight) so as to detect the front direction of the vehicle, the scanner box Bx2 is disposed on the side of the vehicle so as to detect the side direction of the vehicle, and the scanner box Bx3 is disposed behind the vehicle (e.g., near the backlight) so as to detect the rear direction of the vehicle . It is noted that the arrangement of each scanner box Bx is not limited to FIG. 2 and that each scanner box Bx may be arranged at the ceiling portion of the vehicle.

Further, as will be described later, on the scanner box Bx, there is provided information indicative of the horizontal and vertical range-finding range (detection range) by the scanner (s) L to be housed in the scanner box Bx. The information is suitably referred to during the installation of the scanner box Bx to the vehicle or during the calibration of each scanner L after installation. Here, the calibration of the scanner L refers to the detailed adjustment of the range-finding range by the scanner L after the attachment of the scanner box Bx, and includes, for example, installing a reference object in front of the scanner L by a predetermined distance and performing the mechanical position adjustment of the scanner L or the electronic adjustment of the actual scan range within the scannable range according to the range-finding result of the reference object. The scanner box Bx is an example of a "housing" in the present invention.

It is noted that, for each of the scanners L, an adjustment mechanism which performs calibration of each scanner L may be provided. The adjustment mechanism includes, for example, an actuator or the like, and performs position adjustment of the corresponding scanner L based on a control signal supplied from the signal processor SP or the like. Further, for each of the scanners L, an attitude sensor or the like for detecting the posture of each scanner L may be further provided. The scanner L is an example of a "ranging device" and a "detection device" in the present invention.

### [Scanner box]

Next, the scanner box Bx in the present embodiment will be described in detail. Hereinafter, a scanner box Bx1 for accommodating the scanner L1 and the scanner L2 will be described as a typical example.

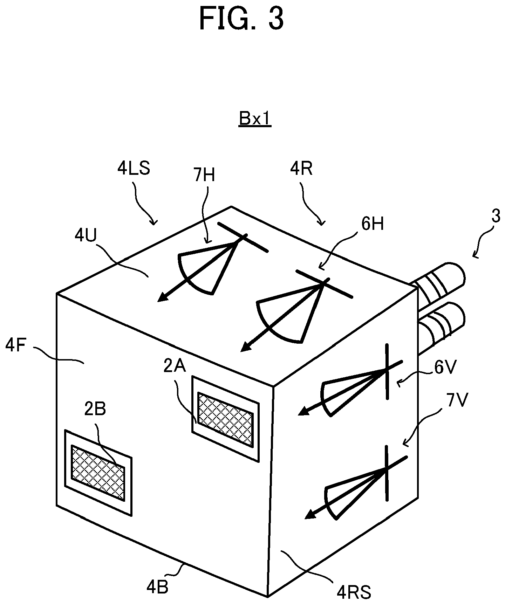

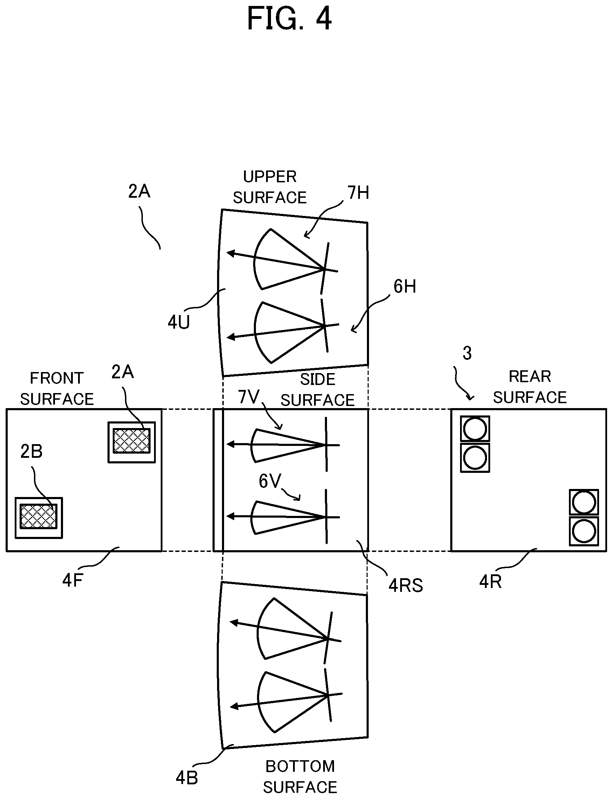

FIG. 3 illustrates a perspective view of the scanner box Bx1. FIG. 4 also illustrates a plane view of each surface of the scanner box Bx1. As shown in FIGS. 3 and 4, the scanner box Bx1 has a hexahedron shape close to a rectangular parallelepiped, and has a front surface 4F, a rear surface 4R, an upper surface 4U, a bottom surface 4B, and two side surfaces 4RS and 4LS.

At the front surface 4F, there are provided the window portion 2A which the transmitting light pulses and the receiving light pulses of the scanner L1 passes through, and the window portion 2B which the transmitting light pulses and the receiving light pulses of the scanner L2 passes through. At the rear surface 4R, there are provided the connectors 3 for the respective scanners L to transmit and receive signals to and from the signal processor SP. Further, at the rear surface 4R, there may be provided a hole (not shown) that is a path of wires required for driving the respective scanners L.

On the upper surface 4U, there are described horizontal ranging information 6H schematically illustrating a horizontal range-finding range (space or area) by the scanner L1 and horizontal ranging information 7H schematically illustrating a horizontal range-finding range (space or area) by the scanner L2. In addition, similarly to the upper surface 4U, on the bottom surface 4B, there are described the horizontal ranging information for the scanner L1 and the horizontal ranging information for the scanner L2. Furthermore, on the side surfaces 4RS, there are provided a vertical ranging information 6V which schematically illustrates a detection range in the vertical direction of the scanner L1 and a vertical ranging information 7V which schematically illustrates a detection range in the vertical direction of the scanner L2. Further, similarly to the side 4RS, on a side 4LS (not shown) in FIG. 4, there are provided the vertical ranging information for the scanner L1 and the vertical ranging information for the scanner L2. Hereafter, the horizontal ranging information 6H, 7H and the vertical ranging information 6V, 7V are collectively referred to as "ranging information".

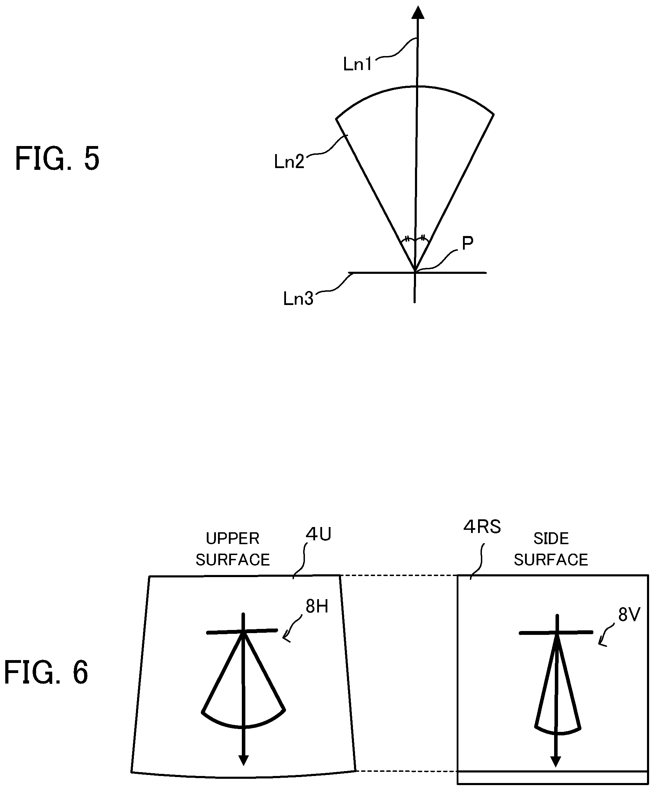

FIG. 5 is an enlarged view of the ranging information described on the scanner box Bx. As shown in FIG. 5, ranging information includes a centerline Ln1 indicated by an arrow, an angular line Ln2 formed into a sector (of circle), and a reference line Ln3 intersecting perpendicularly to the centerline Ln1. Here, the center line Ln1 indicates a direction of the center of the range in the horizontal or vertical direction of the target scanner L. The angle line Ln2 indicates a scan angle range that defines a range of ranging by the target scanner L in the horizontal or vertical direction. The reference line Ln3 indicates the reference position in ranging by the target scanner L. Here, the intersection of the arrow line Ln1 and the reference line Ln3 corresponds to the position (referred to as "reference point P") of the distance 0 in the distance measurement by the target scanner L. Here, the ranging information may be a marked notation by metal work or it may be printed directly on the scanner box Bx. In another example, ranging information may be represented by a seal on which the figure shown in FIG. 5 is printed. In this case, the seal is attached to the scanner box Bx. The angular line Ln2 is an example of "angular information" in the present invention, and the reference line Ln3 is an example of "perpendicular line" in the present invention.

Then, in the present embodiment, on the upper surface 4U and the bottom surface 4B, there are described the horizontal ranging information 6H, 7H indicative of the detection range by the target scanner L (the scanner L1 and the scanner L2 in FIG. 3 and FIG. 4) in the horizontal direction. Besides, on the side surface 4RS and the side surface 4LS, the vertical ranging information 6V, 7V indicative of the detection range by the target scanner L in the vertical direction. Thus, the user can easily recognize the information on the horizontal range and the vertical range-finding range by each scanner L housed in the target scanner box Bx.

Here, the application of the scanner box Bx in this example will be described in supplement.

The lidar unit 1 is used for the purpose of the peripheral environment recognition aid of the vehicle as part of the system of the advanced driving assistance (including automatic driving), and since the high-level ranging accuracy is required, the installation of the scanner box Bx is required to be performed with a high degree of accuracy. According to the scanner box Bx of the present embodiment, since the operator or the like who installs the scanner box Bx can install the scanner box Bx while confirming: the center direction indicated by the center line Ln1; the scan angle range indicated by the angle line Ln2; and the distance 0 indicated by the reference point P, respectively. Thus, the scanner box Bx can be installed with a high degree of accuracy.

Further, the ranging information according to the embodiment is also suitably referred to in the middle of calibration of the scanner L after the installation of the scanner box Bx, especially at the time of performing positioning of the reference object to be ranged for calibration. In this case, an operator and the like can accurately and easily determine the distance from the reference point P to the reference object, so that the installation position of the reference object can be accurately and easily determined. For example, by using a predetermined length of yarn whose one end is fixed at the reference point P, it is also possible for the operator to place a plurality of reference objects equidistant from the reference point P. Even when a reference object for calibration is installed at the boundary position of the detection range of the two scanners L housed in the target scanner box Bx, the operator can suitably determine the installation position of the reference object by confirming each ranging information of the target scanners L, which includes: the center line Ln1 indicative of the center of the detection range; the angle line Ln2 indicative of the scanning angle range; and the reference line Ln3 indicative of the reference point P of the distance 0.

Even in the case where one scanner L is accommodated in the scanner box Bx, or in the case where three or more scanners L are accommodated in the scanner box Bx, each ranging information corresponding to each scanner L to be accommodated is provided on the scanner box Bx in the same way.

FIG. 6 is a diagram showing an upper (top) surface and a side surface of the scanner box Bx for accommodating one scanner L. As shown in FIG. 6, in this case, the horizontal ranging information 8H corresponding to the scanner L housed in the scanner box Bx is described on the upper surface 4U, and the vertical ranging information 8V corresponding to the scanner L is described on the side surface 4RS, respectively. In addition, the horizontal ranging information may be described on the bottom surface 4B similarly to the upper surface 4U, and the vertical ranging information may be described on the side surface 4LS similarly to the side surface 4RS. Even in this case, the operator can accurately and simply perform the installation of the scanner box Bx by referring to the ranging information described in the scanner box Bx.

As described above, the scanner box Bx according to the present embodiment is a housing of the scanner L which functions as a ranging (range-finding) device or a detection device, and ranging information associated with range-finding range (detection range) within which the scanner L performs distance measurement (or detection) is described thereon. By referring to this ranging information, the operator can perform the installment of the scanner box Bx to the vehicle with a high degree of accuracy. This ranging information is also suitably referred to during the calibration of each scanner L housed in the scanner box Bx after the installment of the scanner box Bx.

### [Modification]

Next, a description will be given of a preferred modification to the embodiment. The following modifications may be applied to the embodiments described above in arbitrary combination.

### (First Modification)

The ranging information described in the scanner box Bx is not limited to that shown in FIG. 5. The ranging information may be represented by various display mode indicating the range-finding range. In the following, a description will be given of display modes (second display mode to the fourth display mode) other than the display mode (the first display mode) described in the embodiment.

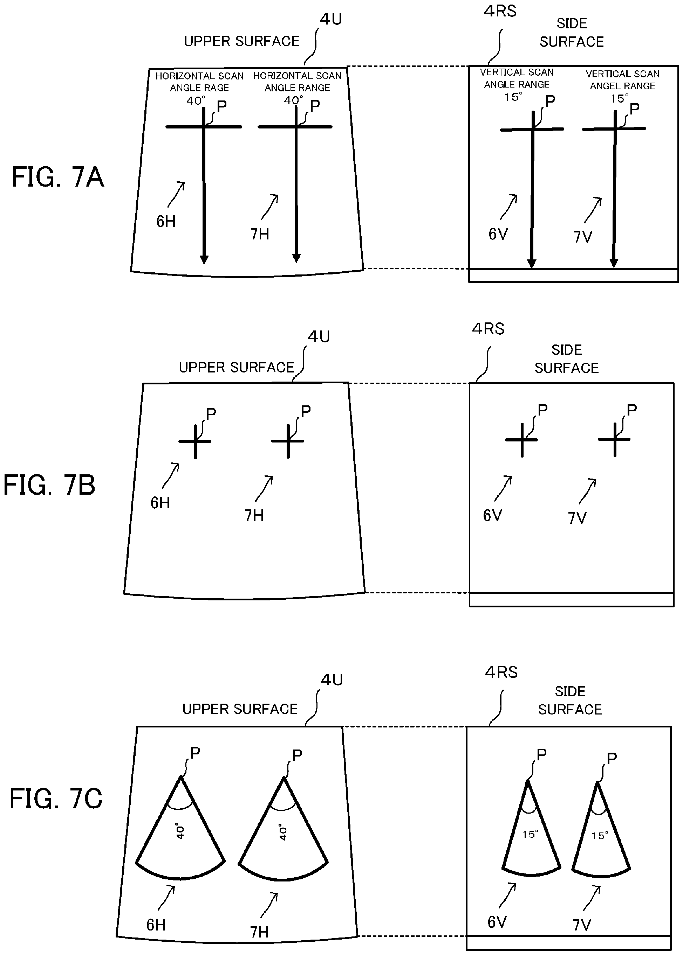

FIG. 7A is a top view of the upper surface 4U and the side surface 4RS with ranging information according to the second display mode. The horizontal ranging information 6H, 7H and the vertical ranging information 6V, 7V according to the second display mode includes not only the center line Ln1 and the reference line Ln3 shown in FIG. 5 but also text information relating to the angle formed by the range-finding range . According to the second display mode, in place of the angle line Ln2, it includes text information indicating the angle (i.e. horizontal scan angle range) formed by the horizontal range-finding range or the angle (i.e. vertical scanning angle range) formed by the vertical range-finding range. Even in this case, the scanner box Bx can visually display the position of the reference point P, the center direction of the range-finding range, and the scan angle range to the operator.

FIG. 7B is a top view of the upper surface 4U and the side surface 4RS with ranging information according to the third display mode. In the exemplary embodiment illustrated by FIG. 7B, as the horizontal ranging information 6H, 7H and the vertical ranging information 6V, 7V, cross marks each clearly indicating the reference point P of each scanner L are shown. Thus, according to the third display mode, only information indicating the reference point P in the horizontal and vertical directions are described in the scanner box Bx. Even in this case, the operator can clearly recognize the reference point P useful in the installation work of the scanner box Bx and calibration of each scanner L.

FIG. 7C is a top view of the upper surface 4U and side surface 4RS with ranging information according to the fourth display mode. In the example of FIG. 7C, as the horizontal ranging information 6H, 7H and the vertical ranging information 6V, 7V, the angular lines Ln2 shown in FIG. 5 and their center angles are shown. Here, the center of each angular line Ln2 is coincident with the corresponding reference point P. Therefore, according to the fourth display mode, while suitably indicating the scan angle range in the horizontal direction and the scan angle range in the vertical direction, it is also possible to suitably indicate the reference point P.

### (Second Modification)

Although the horizontal ranging information is described on both of the upper surface 4U and the bottom surface 4B according to FIG. 4, the horizontal ranging information may be described only on either one of them. Similarly, perpendicular ranging information may be described only on either one of the right side surface 4RS and the left side surface 4LS. Also, instead of both horizontal ranging information and vertical ranging information are described in the scanner box Bx, only one of them may be described in the scanner box Bx.

### (Third Modification)

The scanner box Bx may be positionally-adjustably supported by a supporter marked with a scale relating to the alignment of the scanner box Bx.

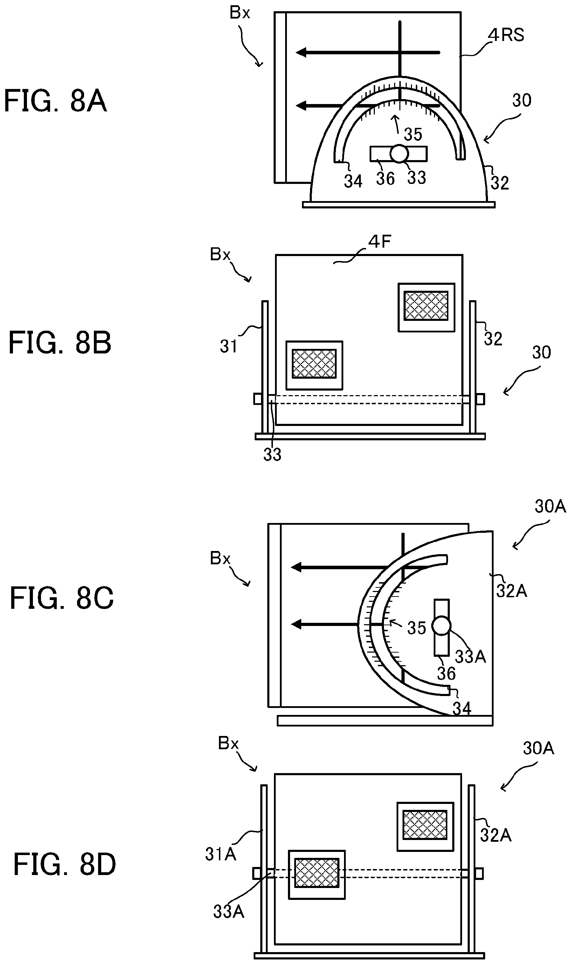

FIG. 8A is a side view of the scanner box Bx supported by the supporter 30, and FIG. 8B is a front view of the scanner box Bx supported by the supporter 30. The supporter 30 has a first support portion 31 and the second support portion 32 each of which has a semi-elliptical shape, and the scanner box Bx is provided between the first support portion 31 and the second support portion 32. The first support portion 31 and the second support portion 32 rotatably supports the shaft portion 33 penetrating the scanner box Bx in the side direction. Further, the shaft portion 33 is slidable together with the scanner box Bx along the groove 36. Furthermore, on the second support portion 32, there are formed an arc-shaped hole portion 34 and a scale 35 along the hole portion 34. According to this configuration, while cross-checking the scale 35 with the ranging information (e.g., the center line and the position of the reference line) exposed by the hole portion 34, the operator can appropriately perform rotation of the shaft portion 33 and sliding in the groove 36 so that the scanner box Bx is adjusted to be at a predetermined position.

FIG. 8C is a side view of the scanner box Bx supported by the supporter 30A, and FIG. 8 (B) is a front view of the scanner box Bx supported by the supporter 30A. In this case, the first support portion 31A and the second support portion 32A of the supporter 30A is formed convex in the arrow direction of the center line of the ranging information, and the hole portion 34A is formed along the outer shape of the convex of the second support portion 32A. Further, the groove 36A here extends in the vertical direction, and sandwiches the shaft portion 33A slidably and rotatably. Even according to this configuration, while cross-checking the scale 35A with the ranging information (e.g., the center line and the position of the reference line) exposed by the hole portion 34A and, the operator can appropriately perform rotation of the shaft portion 33A and sliding in the groove 36A so that the scanner box Bx is adjusted to be at a predetermined position.

### (Fourth Modification)

The scanner box Bx may be marked with a mark for specifying at least one of the center line Ln1, the angular line Ln2, and the reference line Ln3 shown in FIG. 5 as ranging information. Accordingly, in consideration of the appearance design, the description of the ranging information to the scanner box Bx is suitably made inconspicuous.

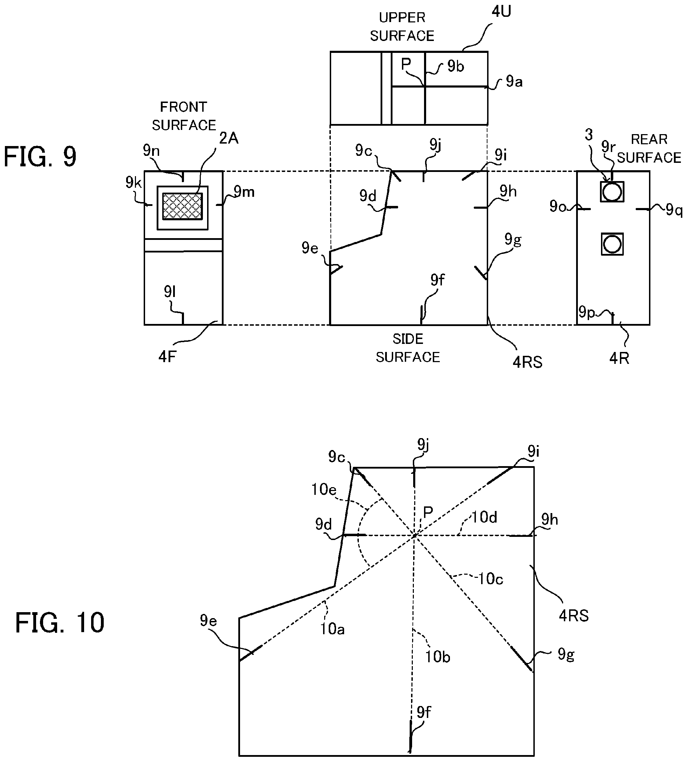

FIG. 9 illustrates a plane view of a front surface 4F, a rear 4R, an upper surface 4U, and a side surface 4RS of a scanner box Bx according to this modification. As shown in FIG. 9, on the upper surface 4U, there are provided a line segment 9a corresponding to the center line Ln1 illustrated in FIG. 5 and a line segment 9b corresponding to the reference line Ln3 illustrated in FIG. 5. The intersection of the line segments 9a and 9b corresponds to the reference point P.

On the other hand, on the side surface 4RS, there are provided marks 9c to 9j formed into short line segments. Then, when installing the scanner box Bx to the vehicle, by drawing a supplementary line selectively connecting two points of the marks 9c to 9j, the center line Ln1 shown in FIG. 5, the angular line Ln2, and the reference line Ln3 can be identified, respectively. It is noted that the same marks as the marks on the side surface 4RS are provided on the side surface 4LS (not shown).

FIG. 10 is a diagram explicitly illustrating auxiliary lines 10a to 10e drawn on the side surface 4RS on the basis of a mark 9c to 9j when the scanner box Bx is installed to the vehicle. In the example illustrated in FIG. 10, the auxiliary line 10d connecting the mark 9d and the mark 9h corresponds to the center line Ln1 illustrated in FIG. 5, the auxiliary line 10b connecting the mark 9f and the mark 9j corresponds to the reference line Ln3 illustrated in FIG. 5, and the intersection of these auxiliary lines corresponds to the reference point P. Further, an arc-shaped auxiliary line 10e corresponds to the angular line Ln2 illustrated in FIG 5, wherein the auxiliary line 10e connects the auxiliary line 10c connecting the mark 9c and the mark 9g and an auxiliary line 10a connecting the mark 9e and the mark 9i. Similarly, for the front surface 4F, at the time of installment of the scanner box Bx to the vehicle, by drawing the auxiliary lines connecting the mark 9n and the mark 91 and the auxiliary lines connecting the mark 9k and mark 9m, it is possible to suitably present the position of the reference point P that is the intersection of these auxiliary lines on the front surface 4F. Further, for the rear surface 4R, at the time of installment of the scanner box Bx to the vehicle, by drawing the auxiliary lines connecting the mark 9o and the mark 9q and the auxiliary lines connecting the mark 9r and the mark 9p, it is possible to suitably present the position of the reference point P that is the intersection of these auxiliary lines. Also, the upper surface 4U, similarly to the side surface 4RS, may be marked for drawing line segments 9 and 9b as an auxiliary line at the time of installment of the scanner box Bx to the vehicle.

Thus, according to this modification, in consideration of the design of the appearance, it is possible to obscure the description on the scanner box Bx for specifying the center line Ln1, the angular line Ln2, and the reference line Ln3 which are illustrated in FIG. 5. It is noted that the marks 9a to 9r are examples of "range-finding range reference point" and "detection range reference point" in the present invention.

### BRIEF DESCRIPTION OF REFERENCE NUMBERS

- 1: Lidar unit
- 30, 30A: Supporter
- L(L1-L6): Scanner
- SP: Signal processor
- Bx (Bx1∼Bx3): Scanner box

## Claims

1. A housing of a ranging device,
the housing having a description of information associated with a range-finding range where the ranging device performs ranging.

2. The housing of the ranging device according to claim 1,
wherein the information associated with the range-finding range includes information including a reference point of the ranging.

3. The housing of the ranging device according to claim 2,
wherein a mark indicative of a position of the reference point is described on the housing as the information including the reference point of the ranging.

4. The housing of the ranging device according to any one of claims 1 to 3,
wherein at least one of a center line of the range-finding range and angular information on the range-finding range is described as the information associated with the range-finding range.

5. The housing of the ranging device according to claim 4,
wherein a sector having a center angle equal to an angle of the range-finding range is described on the housing as the angular information.

6. The housing of the ranging device according to any one of claims 1 to 5,
wherein a center line of the range-finding range and a reference point of the ranging are described as the information associated with the range-finding range, the reference point being indicated as an intersection of the center line and the perpendicular line to the center line.

7. The housing of the ranging device according to any one of claims 1 to 6,
wherein information associated with the range-finding range with respect to horizontal direction and vertical direction is described as the information associated with the range-finding range.

8. The housing of the ranging device according to claim 7,
wherein the information associated with the range-finding range with respect to the vertical direction is described on a side surface of the housing and the information associated with the range-finding range with respect to the horizontal direction is described on an upper surface or a bottom surface of the housing.

9. The housing of the ranging device according to any one of claims 1 to 8,
wherein there are multiple ranging devices including the ranging device in the housing, and
wherein information associated with range-finding ranges with reference to the multiple ranging devices is provided on the housing.

10. The housing of the ranging device according to claim 1,
wherein the housing has the description indicative of multiple range-finding range reference points as the information associated with the range-finding range, and
wherein a line, which connects at least two points selected from the multiple range-finding range reference points, indicates information on a center line of the range-finding range or angular information on the range-finding range.

11. A housing of a detection device,
the housing having a description of information associated with a detection range by the detection device.

12. The housing of the detection device according to claim 11,
wherein at least one of a center line of the detection range and angular information on the detection range is described as the information associated with the detection range.

13. The housing of the detection device according to claim 12,
wherein a sector having a center angle equal to an angle of the detection range is described on the housing as the angular information.

14. The housing of the detection device according to any one of claims 11 to 13,
wherein the detection device is a ranging device which measures a distance to an object,
wherein a center line of the detection range and a reference point of ranging are described as the information associated with the detection range, the reference point being indicated as an intersection of the center line and the perpendicular line to the center line.

15. The housing of the detection device according to any one of claims 11 to 14,
wherein information associated with the detection range with respect to horizontal direction and vertical direction is described as the information associated with the detection range.

16. The housing of the detection device according to claim 15,
wherein the information associated with the detection range with respect to the vertical direction is described on a side surface of the housing and the information associated with the detection range with respect to the horizontal direction is described on an upper surface or a bottom surface of the housing.

17. The housing of the detection device according to any one of claims 11 to 16,
wherein there are multiple detection devices including the detection device in the housing, and
wherein information associated with detection ranges with reference to the multiple detection devices is provided on the housing.

18. The housing of the detection device according to claim 11,
wherein the housing has the description indicative of multiple detection range reference points as the information associated with the detection range, and
wherein a line, which connects at least two points selected from the multiple detection range reference points, indicates information on a center line of the detection range or angular information on the detection range.
